# DEMANDE DE BREVET EUROPEEN

(11) **EP 4 557 549 A1**
(43) Date de publication de la demande: **21.05.2025**
(21) Numéro de dépôt: 24213169.6
(22) Date de dépôt: 15.11.2024
(51) Int. Cl.: H02J 1/08, H02J 3/00, H02J 4/00

(54) **RÉSEAU D ALIMENTATION D'UN AÉRONEF ET AÉRONEF ASSOCIÉ**

(30) Priorité: 16.11.2023 FR 2312566
(71) Demandeur: Dassault Aviation, 75008 Paris (FR)
(72) Inventeur: AUROY, Alexandre, 33701 Mérignac Cedex (FR); BARRACO, Thomas, 33701 Mérignac Cedex (FR); SIGRIST, Zoé, 33701 Mérignac Cedex (FR)
(74) Mandataire: Lavoix

(57) **Abrégé**

La présente invention concerne un réseau d'alimentation (20) d'un aéronef (10) comprenant un premier moteur (21) et un deuxième moteur (22), un premier et un deuxième ensemble de charges (105, 106), une source électrique auxiliaire (41), une première machine électrique (31), connectée au premier moteur (21), un premier convertisseur (51), connecté à la première machine électrique (31), un premier bus d'interconnexion (53), connecté au premier convertisseur par un premier interrupteur primaire (52) et au premier ensemble de charges, une deuxième machine électrique (32), connectée au deuxième moteur, un deuxième convertisseur (61), un deuxième bus d'interconnexion (63), connecté au deuxième convertisseur par un deuxième interrupteur primaire (62) et au deuxième ensemble de charges, un bus de partage (45), connecté au premier bus d'interconnexion par un premier interrupteur inter-bus (91), connecté au deuxième bus d'interconnexion par un deuxième interrupteur inter-bus (92) et connecté à la source électrique auxiliaire.

## Description

La présente invention concerne un réseau d'alimentation d'un aéronef, ainsi que l'aéronef associé.

Il est connu d'intégrer dans les aéronefs, des réseaux électriques qui sont utilisés par exemple pour alimenter en électricité l'aéronef, par exemple pour assurer des fonctions motrices de l'aéronef, pour démarrer électriquement des moteurs de l'aéronef ou pour hybrider les moteurs de l'aéronef. Il est également connu d'équiper les aéronefs de réseaux électriques d'alimentation pour distribuer de l'électricité produite à partir des moteurs à des charges embarquées dans l'aéronef. Toutefois, cumuler ces fonctions signifie un nombre important de réseaux à intégrer dans l'aéronef, ainsi qu'une architecture complexe, peu optimisée et embarquant un nombre important d'équipements électriques tels que des convertisseurs.

Le but de l'invention est alors de proposer un réseau d'alimentation dont l'architecture est simple et qui combine des fonctions de distribution d'électricité et des fonctions motrices de manière réversible.

A cet effet, l'invention a pour objet un réseau d'alimentation d'un aéronef comprenant :
- un premier moteur et un deuxième moteur ;
- un premier ensemble de charges et un deuxième ensemble de charges ;
- une source électrique auxiliaire ;
- une première machine électrique, connectée mécaniquement au premier moteur ;
- un premier convertisseur, connecté à la première machine électrique ;
- un premier bus d'interconnexion, connecté d'une part au premier convertisseur par un premier interrupteur primaire et d'autre part au premier ensemble de charges ;
- une deuxième machine électrique, connectée mécaniquement au deuxième moteur ;
- un deuxième convertisseur ;
- un deuxième bus d'interconnexion, connecté d'une part au deuxième convertisseur par un deuxième interrupteur primaire et d'autre part au deuxième ensemble de charges ; et
- un bus de partage, connecté au premier bus d'interconnexion par un premier interrupteur inter-bus, connecté au deuxième bus d'interconnexion par un deuxième interrupteur inter-bus et connecté à la source électrique auxiliaire.

Grâce à l'invention, il est possible d'embarquer un réseau d'alimentation permettant d'obtenir des fonctions de distribution d'électricité, produite par les moteurs et qui sert à alimenter les ensembles de charges, et d'obtenir des fonctions motrices, par exemple le démarrage ou l'hybridation des moteurs à partir de la source électrique auxiliaire, avec un unique réseau d'alimentation. Le nombre de composants est ainsi limité, en particulier le nombre de convertisseurs et de machines électriques, puisqu'ils servent à la fois pour fournir un couple mécanique aux moteurs et pour alimenter les ensembles de charges. Les interrupteurs assurent l'isolation des composants en cas de panne, et permettent de configurer le réseau d'alimentation en fonction des besoins d'un utilisateur : alimentation des ensembles de charges, ou alimentation du moteur.

Suivant d'autres aspects avantageux de l'invention, le réseau d'alimentation comprend une ou plusieurs des caractéristiques suivantes, prises isolément ou suivant toutes les combinaisons techniquement possibles :
- Le réseau comprend :
   - un premier convertisseur additionnel, et un deuxième convertisseur additionnel connectés respectivement à la première machine électrique et à la deuxième machine électrique ;
   - un premier bus d'interconnexion additionnel et un deuxième bus d'interconnexion additionnel, connectés respectivement au premier convertisseur additionnel par un premier interrupteur primaire additionnel et au deuxième convertisseur additionnel par un deuxième interrupteur primaire additionnel ; et
   - un premier ensemble de charges additionnelles et un deuxième ensemble de charges additionnelles, connectées respectivement au premier bus d'interconnexion additionnel et au deuxième bus d'interconnexion additionnel.
- Les première et deuxième machines électriques comportent des premiers et deuxièmes bobinages indépendants respectivement et les premier et deuxième convertisseurs sont reliés au premiers bobinages respectivement des première et deuxième machines électriques et les premier et deuxième convertisseurs additionnels sont reliés au deuxième bobinages respectivement des première et deuxième machines électriques.
- Les premier et deuxième bus d'interconnexion additionnels sont directement et seulement connectés respectivement au premier bus d'interconnexion par un premier interrupteur intergroupe et au deuxième bus d'interconnexion par un deuxième interrupteur intergroupe.
- Un premier bus de distribution et un deuxième bus de distribution, connectés respectivement au premier bus d'interconnexion par un premier interrupteur secondaire et au deuxième bus d'interconnexion par un deuxième interrupteur secondaire et connectés respectivement au premier ensemble de charges et au deuxième ensemble de charges.
- Le réseau comprend en outre un premier bus de distribution additionnel et un deuxième bus de distribution additionnel, les premier et deuxième bus de distribution additionnels étant connectés de manière respective uniquement :
   - au premier bus de distribution par un troisième interrupteur intergroupe, et au deuxième bus de distribution par un quatrième interrupteur intergroupe;
   - au premier ensemble de charges additionnelles et au deuxième ensemble de charges additionnelles ; et
   - au premier bus d'interconnexion additionnel par un premier interrupteur secondaire additionnel, et au deuxième bus d'interconnexion additionnel par un deuxième interrupteur secondaire additionnel.
- Deux convertisseurs parmi le premier convertisseur, le deuxième convertisseur, le premier convertisseur additionnel et le deuxième convertisseur additionnel sont des onduleurs de tension et deux convertisseurs sont des onduleurs de courant.
- Les première et deuxième machines électriques sont chacune une machine électrique parmi une machine asynchrone, une machine synchrone et une machine à reluctance variable.
- Le premier et le deuxième bus d'interconnexion sont connectés à la source électrique auxiliaire uniquement par le bus de partage.
- Le réseau comprend en outre une première batterie et une deuxième batterie, connectées respectivement au premier bus d'interconnexion et au deuxième bus d'interconnexion.
- Le réseau comprend en outre un premier convertisseur de charge et un deuxième convertisseur de charge, connectés d'une part respectivement au premier bus d'interconnexion et au deuxième bus d'interconnexion et d'autre part respectivement au premier ensemble de charges et au deuxième ensemble de charges.
- Le réseau est configuré pour être dans une configuration de démarrage, dans laquelle :
   - le premier interrupteur primaire et le premier interrupteur inter-bus sont fermés ; et
la première machine électrique est alimentée par la source électrique auxiliaire pour que la première machine électrique génère un couple mécanique.
- Le réseau est configuré pour être dans une configuration d'alimentation, dans laquelle :
   - le premier interrupteur primaire et le premier interrupteur secondaire sont fermés ; et
   - la première machine électrique convertit un couple mécanique fourni par le premier moteur en un courant électrique.

L'invention concerne également un aéronef comprenant un réseau d'alimentation selon ce qui a été décrit ci-dessus.

Suivant d'autres aspects avantageux de l'invention, l'aéronef comprend en outre :
- un réseau de fonctions avioniques et un réseau de commandes de vol, connectés à au moins une machine électrique différente des première et deuxième machines électriques, entraînée par l'un des premier et deuxièmes moteurs.

L'invention apparaîtra plus clairement à la lecture de la description qui va suivre, donnée uniquement à titre d'exemple non limitatif, et faite en référence aux dessins dans lesquels :
- [Fig.1] la figure 1 est une représentation schématique d'un aéronef selon l'invention ;
- [Fig.2] la figure 2 est un schéma d'un réseau d'alimentation selon l'invention dans une première configuration de démarrage ;
- [Fig.3] la figure 3 est un schéma du réseau d'alimentation de la figure 2 dans une deuxième configuration de démarrage ;
- [Fig.4] la figure 4 est un schéma du réseau d'alimentation de la figure 2 dans une configuration d'alimentation ;
- [Fig.5] la figure 5 est un schéma du réseau d'alimentation de la figure 2 dans une configuration de panne ;
- [Fig. 6] la figure 6 est un schéma d'un réseau d'alimentation selon un deuxième mode de réalisation de l'invention ; et
- [Fig. 7] la figure 7 est un schéma d'un réseau d'alimentation selon un troisième mode de réalisation de l'invention.

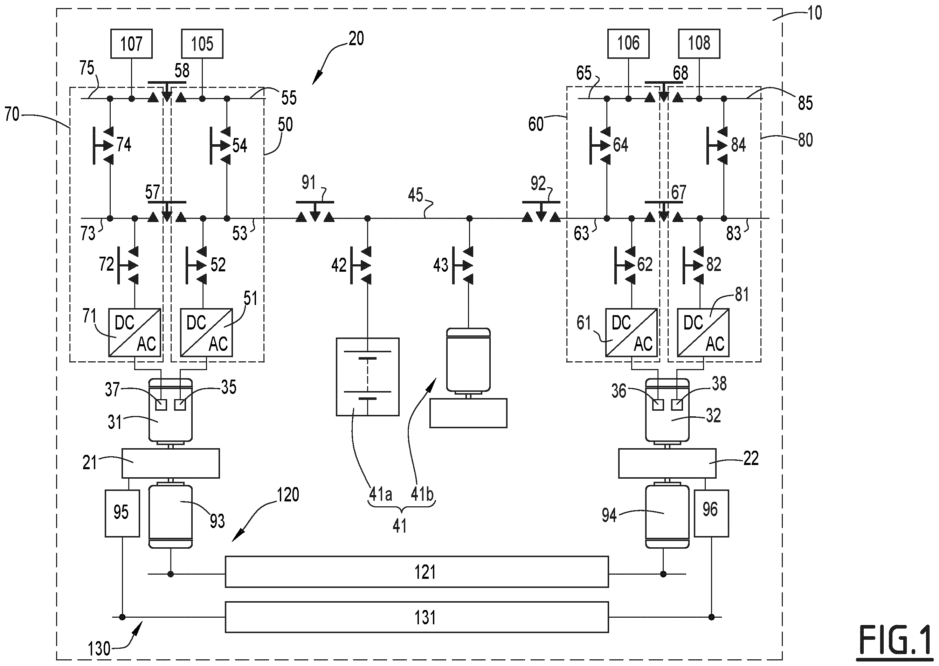

La figure 1 représente un aéronef 10, comprenant un réseau d'alimentation 20. L'aéronef est par exemple un avion ou un drone. Le réseau d'alimentation 20 comprend un premier moteur 21, un deuxième moteur 22, chacun étant relié mécaniquement à une première machine électrique 31 et une deuxième machine électrique 32.

Les premier et deuxième moteurs 21 et 22 sont les moteurs propulsant l'aéronef 10, notamment lorsque l'aéronef est en vol et sont par exemple des turboréacteurs.

Chaque moteur 21, 22 est connecté mécaniquement respectivement à la première machine électrique 31 et à la deuxième machine électrique 32. Chaque machine électrique 31, 32 est configurée pour convertir un courant électrique en force mécanique, avantageusement en un couple mécanique au moteur 21, 22 correspondant auquel elle est connectée, et est également configurée pour convertir une force mécanique, avantageusement un couple mécanique reçu du moteur 21, 22 correspondant, en un courant électrique. Chaque machine électrique 31, 32 est par exemple un moteur électrique, alimenté soit par un courant électrique pour fournir un couple, soit par un couple pour fournir de l'électricité.

Avantageusement, le courant électrique produit par les machines électriques 31 et 32 est un courant triphasé et alternatif. Les première et deuxième machines électriques 31 et 32 sont par exemple de type asynchrone, synchrone, ou encore à reluctance variable. Les première et deuxième machines électriques 31 et 32 sont avantageusement identiques.

Dans l'exemple des figures, les machines électriques 31 et 32 sont des machines comprenant plusieurs bobinages, elles sont aussi dites multivoies ou étoiles. Les machines électriques 31 et 32 sont des machines électriques à deux bobinages, les bobinages 35 et 37 pour la première machine électrique et les bobinages 36 et 38 pour le deuxième machine électrique 32, représentés schématiquement sur les figures. Chaque bobinage 35, 36, 37, 38 comprend avantageusement trois phases pour produire ou recevoir du courant triphasé.

Le réseau d'alimentation 20 comprend une source électrique auxiliaire 41 reliée au bus de partage 45 pour son alimentation.

La source électrique auxiliaire 41 comprend une batterie 41a et une unité de puissance auxiliaire 41b. Avantageusement, la batterie 41a est configurée pour fournir du courant continu haute tension, par exemple, dont la tension est égale à 270 V. La batterie 41a est avantageusement connectée au bus de partage 45 par l'intermédiaire d'un premier interrupteur de partage 42. L'unité de puissance auxiliaire 41b est par exemple un moteur couplé à une machine électrique fournissant du courant continu, ou selon un autre exemple, un moteur couplé à une machine électrique configurée pour produire du courant alternatif, elle-même connectée à un convertisseur AC-DC non représenté. L'unité de puissance auxiliaire 41b est avantageusement connectée au bus de partage 45 par l'intermédiaire d'un deuxième interrupteur de partage 43. L'unité de puissance auxiliaire 41b est, ainsi que représentée dans les figures, un moteur couplé à une machine électrique afin de produire de l'électricité. De manière particulièrement avantageuse, la batterie 41a est configurée pour être rechargée à partir d'une unité d'alimentation au sol fournissant un courant continu, et le moteur de l'unité de puissance auxiliaire 41b est configuré pour être démarré à partir d'une unité d'alimentation au sol fournissant un courant alternatif.

Le réseau d'alimentation 20 comprend un premier groupe de distribution 50, un deuxième groupe de distribution 60 et de manière particulièrement avantageuse, un premier groupe de distribution additionnel 70 et un deuxième groupe de distribution additionnel 80. Le premier groupe de distribution 50 et le premier groupe de distribution additionnel 70 sont connectés à la première machine électrique 31, plus particulièrement au premier bobinage 35 et au deuxième bobinage 37, respectivement. Le deuxième groupe de distribution 60 et le deuxième groupe de distribution additionnel 80 sont connectés à la deuxième machine électrique 32, plus particulièrement au premier bobinage 36 et au deuxième bobinage 38, respectivement.

Le réseau d'alimentation 20 comprend en outre des charges électriques, ici deux ensembles de charges 105, 106, et deux ensembles de charges additionnelles 107 et 108, connectées respectivement au premier groupe de distribution 50, au deuxième groupe de distribution 60, au premier groupe de distribution additionnel 70 et au deuxième groupe de distribution additionnel 80.

Chaque groupe de distribution 50, 60, 70 et 80 comprend un convertisseur, respectivement un premier convertisseur 51, un deuxième convertisseur 61, un premier convertisseur additionnel 71 et un deuxième convertisseur additionnel 81 et un bus d'interconnexion, respectivement un premier bus d'interconnexion 53, un deuxième bus d'interconnexion 63, un premier bus d'interconnexion additionnel 73 et un deuxième bus d'interconnexion additionnel 83.

Les premier et deuxième convertisseurs 51, 61, sont connectés aux premiers bobinages 35 et 36 respectivement, et les premier et deuxième convertisseurs additionnels 71 et 81 sont connectés aux deuxièmes bobinages 37 et 38, respectivement. Les convertisseurs 51, 61, 71 et 81 sont des convertisseurs réversibles, c'est-à-dire capables de produire du courant continu lorsqu'alimenté avec du courant alternatif, et du courant alternatif lorsqu'alimenté avec du courant continu. Deux convertisseurs parmi les convertisseurs 51, 61, 71 et 81 sont avantageusement des onduleurs de courant, et deux autres sont des onduleurs de tension. Par exemple, les premier et deuxième convertisseurs 51 et 61 sont des onduleurs de tension et les premier et deuxième convertisseurs additionnels 71 et 81 sont des onduleurs de courant. En variante, les convertisseurs 51, 61, 71 et 81 sont tous des onduleurs de tension, ou tous des onduleurs de courant. Les convertisseurs 51, 61, 71 et 81 sont avantageusement des convertisseurs AC-DC.

Chaque bus d'interconnexion 53, 63, 73 et 83 est respectivement connecté au premier convertisseur 51, au deuxième convertisseur 61, au premier convertisseur additionnel 71 et au deuxième convertisseur additionnel 81.

Les convertisseurs 51, 61, 71 et 81 sont connectés respectivement au premier bus d'interconnexion 53, au deuxième bus d'interconnexion 63, au premier bus d'interconnexion additionnel 73 et au deuxième bus d'interconnexion additionnel 83 par l'intermédiaire d'interrupteurs primaires, à raison d'un interrupteur primaire par convertisseur 51, 61, 71 et 81, respectivement un premier interrupteur primaire 52, un deuxième interrupteur primaire 62, un premier interrupteur primaire additionnel 72 et un deuxième interrupteur primaire additionnel 82. Chaque premier bus d'interconnexion 53, 63, 73 et 83 est ainsi isolé ou connecté au convertisseur 51, 61, 71 et 81 appartenant au même groupe de distribution 50, 60, 70 ou 80.

De manière particulièrement avantageuse, chaque groupe de distribution 50, 60, 70, 80 comprend en outre un bus de distribution, respectivement un premier bus de distribution 55, un deuxième bus de distribution 65, un premier bus de distribution additionnel 75 et un deuxième bus de distribution additionnel 85.

Avantageusement, les bus d'interconnexion 53, 63, 73, 83 sont connectés respectivement au premier ensemble de charges 105, au deuxième ensemble de charges 106, au premier ensemble de charges additionnelles 107 et au deuxième ensemble de charges additionnelles 108 par l'intermédiaire respectivement du premier bus de distribution 55, du deuxième bus de distribution 65, du premier bus de distribution additionnel 75 et du deuxième bus de distribution additionnel 85.

En variante non représentée, les ensembles de charges 105, 106, 107 et 108 sont respectivement connectées directement aux bus d'interconnexion 53, 63, 73 et 83. Selon une autre variante non représentée, les ensembles de charges 105, 106, 107 et 108 sont connectés aux bus d'interconnexion 53, 63, 73 et 83 par l'intermédiaire respectivement du premier bus de distribution 55, du deuxième bus de distribution 65, du premier bus de distribution additionnel 75 et du deuxième bus de distribution additionnel 85, et en outre, des charges supplémentaires sont également connectées directement aux bus d'interconnexion 53, 63 et/ou aux bus d'interconnexion additionnels 73 et 83.

Chaque bus de distribution 55 et 65 est connecté au bus d'interconnexion 53 et 63 du même groupe de distribution 50 et 60 par respectivement un premier et un deuxième interrupteur secondaire 54, 64, et chaque bus de distribution additionnel 75 et 85 est connecté au bus d'interconnexion additionnel 73 et 83 du même groupe de distribution additionnel 70 et 80 par respectivement un premier et un deuxième interrupteur secondaire additionnel 74 et 84. Chaque bus d'interconnexion 53, 63, 73 et 83 est connecté respectivement à l'ensemble de charges 105, 106, 107 et 108.

Le premier bus d'interconnexion additionnel 73 est connecté au premier bus d'interconnexion 53 par l'intermédiaire d'un premier interrupteur intergroupe 57. Avantageusement, le premier bus d'interconnexion additionnel 73 est connecté au premier bus d'interconnexion 53 directement par l'intermédiaire du premier interrupteur intergroupe 57.

Le deuxième bus d'interconnexion additionnel 83 est connecté au deuxième bus d'interconnexion 63 par l'intermédiaire d'un deuxième interrupteur intergroupe 67. Avantageusement, le deuxième bus d'interconnexion additionnel 83 est connecté au deuxième bus d'interconnexion 63 directement par l'intermédiaire du deuxième interrupteur intergroupe 67.

De manière particulièrement avantageuse, le premier bus de distribution additionnel 75 est connecté au premier bus de distribution 55 par l'intermédiaire d'un troisième interrupteur intergroupe 58 et le deuxième bus de distribution additionnel 85 est connecté au deuxième bus de distribution 65 par l'intermédiaire d'un quatrième interrupteur intergroupe 68.

Les premier et deuxième bus d'interconnexion 53 et 63 sont également connectés au bus de partage 45 par respectivement un premier interrupteur inter-bus 91 et un deuxième interrupteur inter-bus 92.

De manière particulièrement avantageuse, le premier bus d'interconnexion 53 est uniquement connecté au bus de partage 45, au premier convertisseur 51, au premier bus d'interconnexion additionnel 73, et au premier bus de distribution 55, et est connecté à ceux-ci uniquement par les interrupteurs 91, 52, 57 et 54 respectivement et le premier bus d'interconnexion additionnel 73 n'est connecté qu'au premier convertisseur additionnel 71, au premier bus d'interconnexion 53 et au premier bus de distribution additionnel 75, et est connecté à ceux-ci uniquement par les interrupteurs 72, 57 et 74 respectivement. Le premier bus de distribution 55 est avantageusement connecté uniquement au premier bus d'interconnexion 53 et au premier bus de distribution additionnel 75, et est connecté à ceux-ci uniquement par les interrupteurs 54 et 58 respectivement, et le premier bus de distribution additionnel 75 n'est connecté qu'au premier bus de distribution 55 et au premier bus d'interconnexion additionnel 73 et est connecté à ceux-ci uniquement par les interrupteurs 58 et 74 respectivement.

Il en est de même pour les deuxièmes bus de distribution 65 et 85.

Ainsi, les premier bus d'interconnexion 53 et 73 et de distribution 55 et 75 d'une part, et les deuxième bus d'interconnexion 63 et 83 et de distribution 65 et 85 d'autre part sont connectés en carré, respectivement par les interrupteurs 54, 74, 57 et 58 d'une part et par les interrupteurs 64, 84, 67 et 68 d'autre part. Ainsi les bus d'interconnexion 53, 63, 73 et 83, et de distribution 55, 65, 75 et 85 sont entièrement isolés des autres bus, y compris du bus de partage 45, si besoin.

En particulier, le premier et le deuxième bus d'interconnexion 53 et 63 sont connectés à la source électrique auxiliaire 41 uniquement par le bus de partage 45. Ainsi, pour connecter le premier et le deuxième moteurs 21 et 22 à la source électrique auxiliaire 41, il est nécessaire de connecter le premier et le deuxième bus d'interconnexion 53 et 63 au bus de partage 45.

Avantageusement, les convertisseurs 51, 61, 71 et 81 sont connectés seulement à l'une des machines électriques 31 et 32 et à l'un des bus d'interconnexion 53, 63, 73, et 83, respectivement à la première machine électrique 31 et au premier bus d'interconnexion 53, à la deuxième machine électrique 32 et au deuxième bus d'interconnexion 63, à la première machine électrique 31 et au premier bus d'interconnexion additionnel 73 et enfin à la deuxième machine électrique et au deuxième bus d'interconnexion additionnel 83.

Les interrupteurs 52, 54, 57, 58, 62, 64, 67 68, 72, 74, 82, 84, 91, 92, 42 et 43 sont avantageusement des interrupteurs commandés mécaniques, comme des sectionneurs, des contacteurs,des disjoncteurs, ou encore des interrupteurs semi-conducteurs comme des tyristors. Les interrupteurs 52, 54, 57, 58, 62, 64, 67 68, 72, 74, 82, 84, 91, 92, 42 et 43 sont par exemple tous identiques, mais en option certains interrupteurs sont différents des autres, en termes de calibre, de logique de pilotage, ou de technologie utilisée. Par exemple, certains interrupteurs sont des interrupteurs mécaniques, et d'autres sont des interrupteurs semi-conducteurs.

Les ensembles de charges 105 à 108 sont des charges configurées pour fonctionner lorsqu'elles sont alimentées avec un courant continu.

Les ensembles de charges 105 à 108 sont par exemple des équipements électroniques comme des calculateurs, des radars, des pompes, ou des éléments d'un système de dégivrage de l'aéronef 10. Par exemple, le premier ensemble de charges 105 est par exemple un système de dégivrage gauche de l'aéronef 10 et le deuxième ensemble de charges 106 un système de dégivrage droit de l'aéronef 10. En variante non représentée, le système d'alimentation 20 comprend moins de quatre ensembles de charges, par exemple trois ensembles de charges, l'un des ensembles de charges étant alimenté par deux groupes de distribution à la fois. Cela permet d'assurer une alimentation électrique redondante de cet ensemble de charges, ce qui est particulièrement avantageux dans le cas où cet ensemble de charges est un équipement critique au fonctionnement de l'aéronef 10.

Les convertisseurs 51, 61, 71 et 81 sont avantageusement configurés pour fournir aux ensembles de charges 105 à 108 un courant avec un réseau haute tension, par exemple de tension égale à 270 V, ou à basse tension, par exemple égale à 28 V, en fonction des besoins de l'aéronef 10.

Ainsi que représenté sur la figure 1, les premier et deuxième moteurs 21 et 22 sont chacun connectés à une machine électrique supplémentaire, respectivement une troisième machine électrique 93 et une quatrième machine électrique 94. Les premier et deuxième moteurs 21 et 22, ainsi que la troisième et la quatrième machine électrique 93 et 94 font partie d'une réseau électrique supplémentaire 120 comprenant l'essentiel des fonction avioniques 121 de l'aéronef 10. Le réseau électrique supplémentaire 120 est aussi dit réseau basique 120 de l'aéronef 10.

En outre, les premiers et deuxième moteurs 21 et 22 sont avantageusement chacun connectés à une cinquième et une sixième machine électrique 95 et 96, qui sont avantageusement des machines à aimants permanents. Les premier et deuxième moteurs 21 et 22, ainsi que les machines à aimants permanents alimentent un réseau de commandes de vol 130 de l'aéronef 10, comprenant des dispositifs de commande de vol 131. Les premier et deuxième moteurs 21 et 22 sont donc avantageusement communs à plusieurs réseaux de l'aéronef 10, à savoir le réseau d'alimentation 20, le réseau de fonctions avioniques 120 et le réseau de commande de vol 130.

En variante non représentée, le réseau d'alimentation 20 ne comprend que le premier et le deuxième groupe de partage 50 et 60, qui ne comprennent pas de bus de distribution. Dans ce cas, le premier ensemble de charges 105 est directement connectée au premier bus d'interconnexion 53 et le deuxième ensemble de charges 106 est directement connectée au deuxième bus d'interconnexion 63.

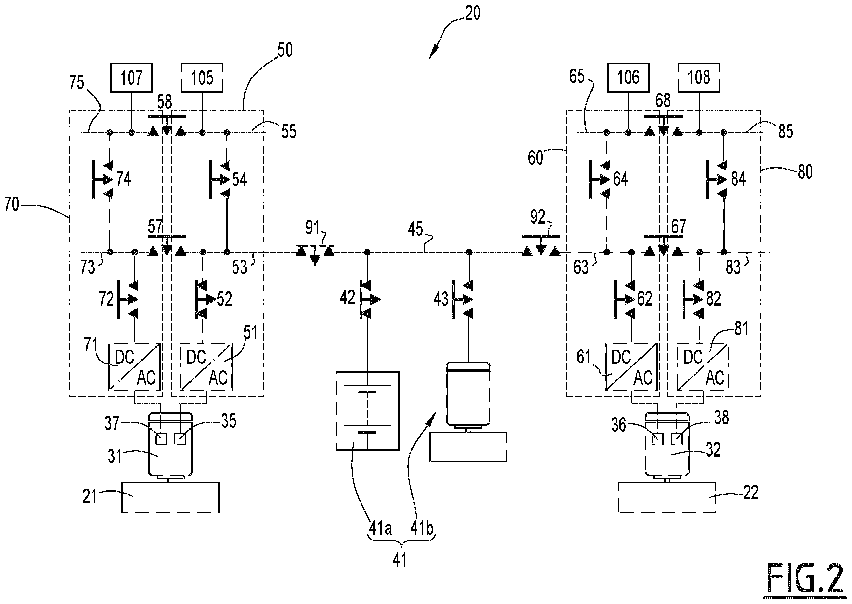

Le réseau d'alimentation 20 est configuré pour fonctionner selon plusieurs configurations différentes, dont certaines sont représentées dans les figures 2 à 5.

Une configuration de démarrage du premier moteur 21 par la source électrique auxiliaire 41 est représentée à la figure 2.

Dans la configuration de démarrage du premier moteur 21 par la source électrique auxiliaire 41, les premier et deuxième moteurs 21 et 22 sont initialement à l'arrêt. Les interrupteurs 42, 91 et 52 sont commandés pour être fermés, par exemple suite à une commande de l'utilisateur. Les autres interrupteurs sont ouverts. Les ensembles de charges 105 à 108 ne sont pas alimentés en électricité. La source électrique auxiliaire 41, ici, la batterie 41a, fournit un courant électrique, qui circule dans le bus de partage 45 et le premier bus d'interconnexion 53 jusqu'au premier convertisseur 51. Le premier convertisseur 51 convertit le courant continu fourni par la batterie 41a en courant alternatif triphasé, nécessaire au fonctionnement de la première machine électrique 31. La première machine électrique 31 fournit ainsi un couple mécanique au premier moteur 21. Le premier moteur 21 est entraîné par la première machine électrique 31, en particulier entraîné en rotation, afin de faire circuler de l'air dans le premier moteur 21 avec une vitesse suffisante pour démarrer le premier moteur 21.

En variante non représentée, c'est le deuxième interrupteur de partage 43 qui est fermé plutôt que le premier interrupteur de partage 42. Dans ce cas, c'est le groupe auxiliaire de puissance 41b qui fournit un courant électrique au premier convertisseur 51.

Selon une variante non représentée, les interrupteurs 42, 91, 57 et 72 sont fermés et les autres interrupteurs ouverts. Cela est particulièrement avantageux, afin de continuer à entraîner le premier moteur 21 en cas de dysfonctionnement ou de panne du premier convertisseur 51.

En variante, la configuration de démarrage du premier moteur 21 par la source électrique auxiliaire 41 est une configuration d'hybridation du premier moteur 21, permettant, dans l'exemple de la figure 2, un fonctionnement hybride du premier moteur 21, qui est alors entraîné par le couple mécanique fourni par la machine électrique 31. Avantageusement, lorsque le système d'alimentation 20 est en configuration d'hybridation du premier moteur 21, le premier convertisseur 51 est alimenté en électricité par la source électrique auxiliaire 41, la première machine électrique 31 ne fournit pas d'électricité aux premiers convertisseurs 51 et 71, et seulement un couple mécanique au premier moteur 21. Le premier convertisseur additionnel 71 n'est alimenté ni par la source électrique auxiliaire 41, ni par la première machine électrique 31.

Une configuration de démarrage du deuxième moteur 22, ou d'hybridation par la source électrique auxiliaire 41 est obtenue en commandant en fermeture les interrupteurs 43, 92, 62 et en commandant en ouverture les autres interrupteurs.

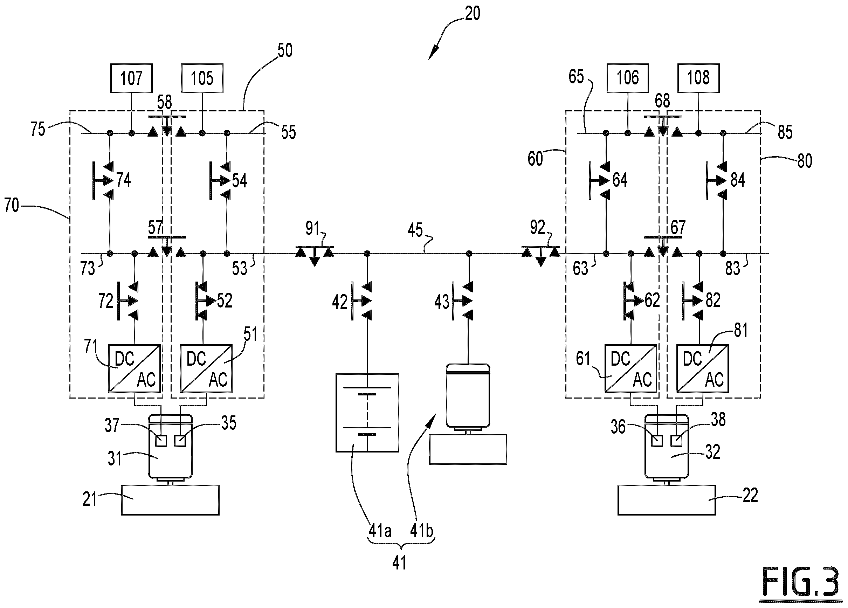

La figure 3 représente une configuration de démarrage par moteur, aussi dite configuration de démarrage croisée. Dans la configuration de démarrage par moteur représentée à la figure 3, le premier moteur 21 est en marche et le deuxième moteur 22 est à l'arrêt. Le premier moteur 21 fournit un couple mécanique à la première machine électrique 31, qui fournit ainsi au premier convertisseur 51 un courant électrique, avantageusement triphasé alternatif. Le premier convertisseur 51 convertit le courant fourni par la première machine électrique 31 en courant continu, par exemple en courant continu haute tension, ou en courant continu basse tension. Les interrupteurs 52, 91, 92 et 62 sont commandés en fermeture, et les autres interrupteurs sont commandés en ouverture. Les ensembles de charges 105 à 108 ne sont donc pas alimentés. Le courant circule depuis le premier convertisseur 51 dans le premier bus d'interconnexion 53, le bus de partage 45 et le deuxième bus de d'interconnexion 63 jusqu'au deuxième convertisseur 61. Le deuxième convertisseur 61 convertit le courant en courant alternatif triphasé, qui est ensuite fourni à la deuxième machine électrique 32. La machine électrique 32 convertit le courant électrique en couple mécanique afin de démarrer le deuxième moteur 22.

En variante non représentée de la configuration de démarrage par moteur, les interrupteurs 72, 52, 57, 91, 92, 62, 67, 82 sont tous fermés. Ainsi, dans le cas où le premier moteur 21 est en marche, les deux bobinages 35 et 37 sont utilisés pour générer de l'électricité, et les deux bobinages 36 et 38 sont utilisés pour générer un couple moteur.

De manière optionnelle, notamment en cas de panne, par exemple du premier convertisseur 51, il est tout de même possible de démarrer le deuxième moteur, en fermant les interrupteurs 72 et 57 à la place de l'interrupteur 52. Dans ce cas c'est le premier convertisseur additionnel 71 qui convertit le courant de la première machine électrique 31, qui circule ensuite dans le premier bus d'interconnexion additionnel 73 puis dans le premier bus d'interconnexion 53.

Une configuration non représentée consiste à alimenter les ensembles de charges 105 à 108 par la source électrique auxiliaire 41. Par exemple, les interrupteurs 42, 91, 92, 54, 64, 74, 58 et 68 sont fermés et les autres interrupteurs sont ouverts.

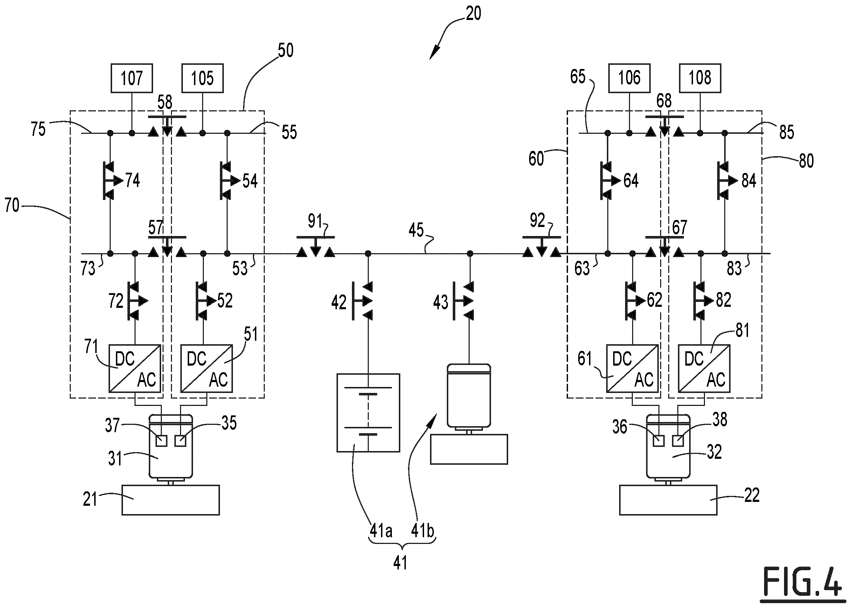

La figure 4 représente une configuration d'alimentation normale, c'est-à-dire lorsque l'aéronef est en vol, et que le réseau d'alimentation 20 ne présente aucun dysfonctionnement.

En configuration d'alimentation, les interrupteurs 52, 62, 72, 82, 54, 64, 74 et 84 sont commandés en fermeture et les autres interrupteurs sont commandés en ouverture. Le premier moteur 21 et le deuxième moteur 22 sont en fonctionnement. Les première et deuxième machines électriques 31 et 32 produisent de l'électricité, qui est fournie aux convertisseurs 51, 61, 71 et 81 qui convertissent le courant fourni par les machines électriques 31 et 32 en courant continu haute tension, ou en courant continu basse tension. Ainsi, pour chaque groupe de distribution 50, 60, 70, 80, un courant électrique circule depuis chaque convertisseur 51, 61, 71 et 81 du groupe de distribution dans le bus d'interconnexion 53, 63, 73 et 83, dans le bus de distribution 55, 65, 75 et 85 jusqu'à l'ensemble de charges 105 à 108, respectivement connectée aux bus de distribution 55, 65, 75 et 85, l'ensemble de charges 105 à 108 étant ainsi alimentée en électricité.

Dans la configuration d'alimentation, les ensembles de charges 105 à 108 sont ainsi alimentées indépendamment les unes des autres par les premier et deuxième moteurs 21 et 22. Les charges 105 à 108 sont ainsi alimentées en étant sur un réseau électrique 20 distinct du réseau basique 120.

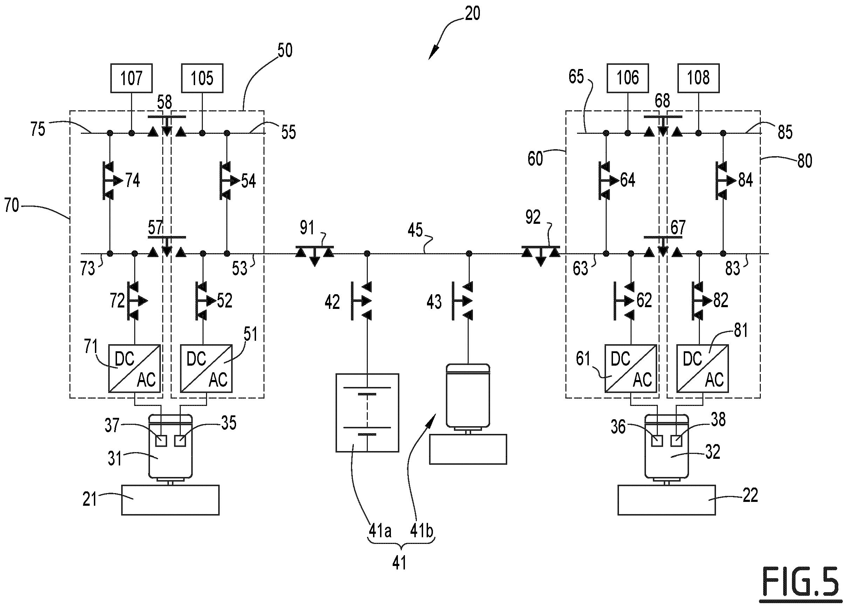

La figure 5 représente un exemple d'une configuration de panne, dans laquelle le deuxième convertisseur 61 ne fonctionne pas correctement. Dans la configuration de panne présentée à la figure 5, les interrupteurs 52, 72, 82, 54, 64, 74, 84, 91 et 92 sont commandés en fermeture et les autres interrupteurs sont commandés en ouverture.

Le deuxième convertisseur 61 est isolé du reste du réseau d'alimentation 20, grâce à l'ouverture de l'interrupteur primaire 62. Dans ce cas, la deuxième machine électrique 32 n'alimente plus en électricité le deuxième bus d'interconnexion 63 et donc, le deuxième ensemble de charges 106. C'est la première machine électrique 31 qui alimente le deuxième ensemble de charges 106, le courant électrique fourni par la première machine électrique circulant depuis le premier convertisseur 51 dans le premier bus d'interconnexion 53 puis d'une part dans le premier bus de distribution 55 jusqu'au premier ensemble de charges 105, et d'autre part dans le bus de partage 45, le deuxième bus d'interconnexion 63 et le deuxième bus de distribution 65 jusqu'au deuxième ensemble de charges 106.

En fonction de la criticité des ensembles de charges 105 à 108, d'autres configurations sont possibles en variante, par exemple, en commandant en fermeture les interrupteurs 82, 84, 68 et en commandant en ouverture les autres interrupteurs. Dans ce cas, les ensembles de charges 108 et 106 sont toutes deux alimentées à partir du deuxième convertisseur additionnel 81. Ceci est particulièrement avantageux si le deuxième ensemble de charges additionnelles 108 est un ensemble de charges non critique, ou qui fonctionne même avec une puissance électrique fournie inférieure à une puissance électrique nominale, la puissance électrique nominale étant obtenue en fonctionnement en configuration d'alimentation du réseau d'alimentation 20.

En variante, en cas de défaut dans le premier ou deuxième bus d'interconnexion additionnel 73 ou 83, par exemple le deuxième bus d'interconnexion additionnel 83, ce dernier est isolé en ouvrant les interrupteurs 82, 67 et 84. Le deuxième ensemble de charges additionnel 108 est avantageusement alimentée en électricité depuis le deuxième convertisseur en fermant l'interrupteur 68. De manière avantageuse, en particulier pour maintenir une puissance électrique fournie au deuxième ensemble de charges additionnelles 108 plus proche de la puissance électrique nominale, les interrupteurs 91 et 92 sont commandés en fermeture. Les deuxièmes ensembles de charges 106 et 108 sont alors alimentées en électricité provenant à la fois du premier et du deuxième convertisseur 51 et 61.

L'architecture du réseau d'alimentation 20 permet ainsi d'alimenter chaque ensemble de charges 105 à 108, soit par l'un des moteurs 21 ou 22, soit par la source électrique auxiliaire 41, en les maintenant isolées les unes des autres. En cas de panne, le réseau d'alimentation 10 est configurable pour s'adapter et continuer à alimenter tous les ensembles de charges 105 à 108.

Les convertisseurs 51, 61, 71 et 81 permettent ainsi l'utilisation de différentes sources, et le fonctionnement des machines électriques 31 et 32 en tant que sources d'électricité ou en tant qu'ensembles de charges pour faire fonctionner les moteurs 21 et 22, en utilisant le même réseau d'alimentation 20.

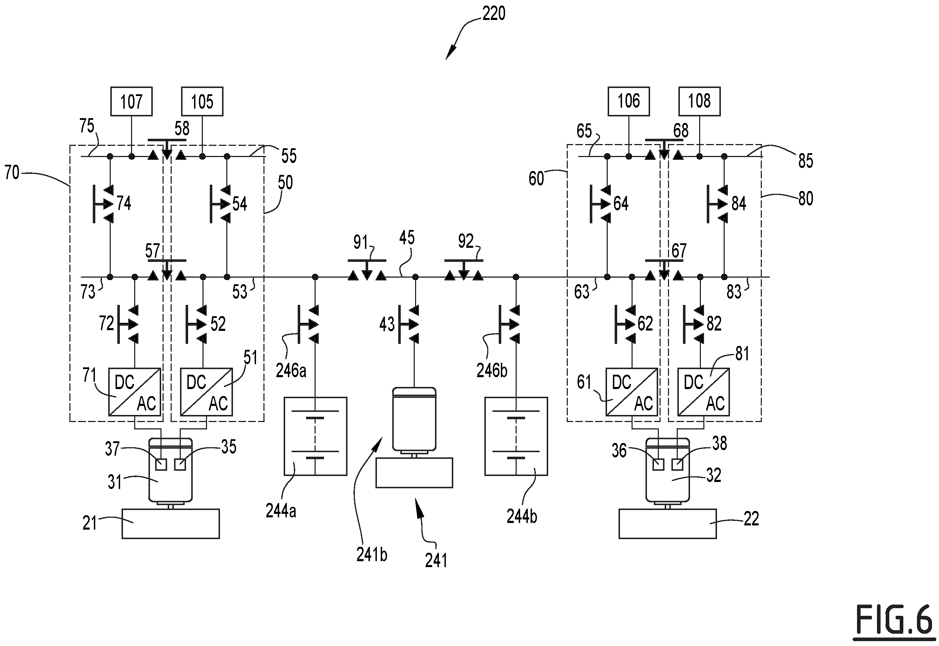

La figure 6 présente un réseau d'alimentation 220, en tant que mode de réalisation alternatif du réseau d'alimentation 20. Le réseau d'alimentation 220 diffère du réseau d'alimentation 20 en ce qu'il comprend une source électrique auxiliaire 241, qui remplace la source électrique auxiliaire 41. La source électrique auxiliaire 241 comprend seulement une unité de puissance auxiliaire 241b. L'unité de puissance auxiliaire 241b est ici un moteur couplé à une génératrice, qui est en option non représentée, couplée à un convertisseur.

Le réseau d'alimentation 220 comprend en outre une première batterie 244a et une deuxième batterie 244b, chacune reliée à l'un des bus d'interconnexion 53 et 63. Dans l'exemple représenté à la figure 6, la première batterie 244a est reliée au premier bus d'interconnexion 53 par l'intermédiaire d'un premier interrupteur de batterie 246a et la deuxième batterie 244b est reliée au deuxième bus d'interconnexion 63 par l'intermédiaire d'un deuxième interrupteur de batterie 246b. La présence des batteries 244a et 244b et leur connexion respective directement au bus d'interconnexion 53 et 63 permet d'améliorer la redondance du réseau 220 et notamment d'alimenter les groupes de distribution 50, 70 par la batterie 244a et les groupes de distribution 60 et 80 par la batterie 244b en cas de panne ou de connexion défectueuse du bus de partage 45.

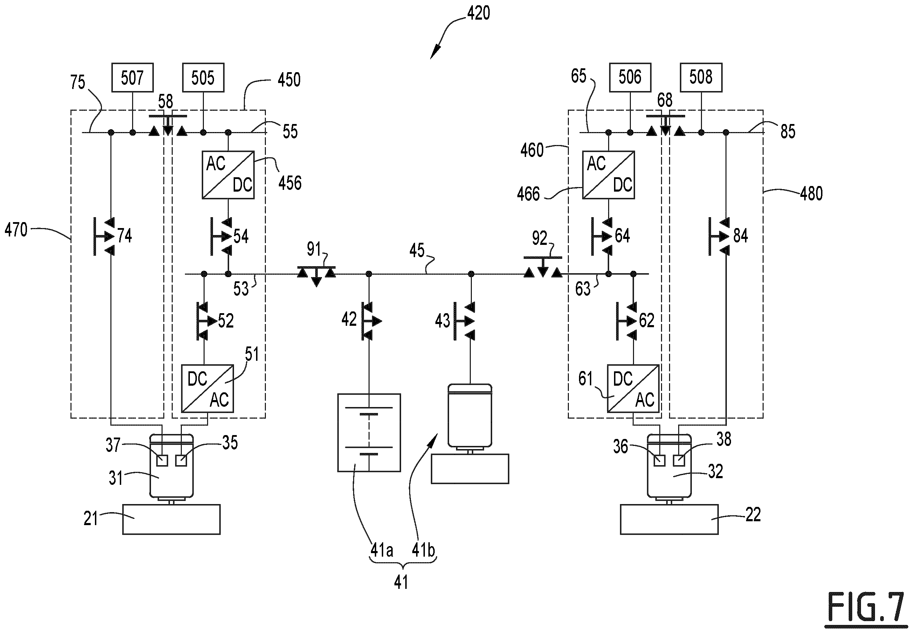

La figure 7 présente un réseau d'alimentation 420, en tant que mode de réalisation alternatif de l'invention. Les différences du réseau d'alimentation 420 avec le réseau d'alimentation 20 sont décrites ci-dessous.

Le réseau d'alimentation 420 diffère du réseau d'alimentation 20 en ce qu'il comprend les groupes de distribution 450, 460, et les groupes de distribution additionnels 470 et 480 qui remplacent respectivement les groupes de distribution 50, 60 et les groupes de distribution additionnels 70 et 80. Le réseau d'alimentation 420 comprend également des ensembles de charges 505, 506, 507 et 508 qui remplacent respectivement les ensembles de charges 105, 106, 107 et 108 et qui sont configurés pour fonctionner lorsqu'elles sont alimentées par un courant alternatif.

Les groupes de distribution 450 et 460 diffèrent des groupes de distribution 50 et 60 en qu'ils comprennent en outre respectivement un premier convertisseur de charge 456 et un deuxième convertisseur de charge 466. Les convertisseurs de charge 456 et 466 sont connectés respectivement entre le premier interrupteur secondaire 54 et le premier bus de distribution 55 et entre le deuxième interrupteur secondaire 64 et le deuxième bus de distribution 65. Les convertisseurs de charge 456 et 466 sont des convertisseurs DC-AC, et sont configurés pour convertir le courant continu reçu depuis les bus d'interconnexion 53 et 63 en courant alternatif pour alimenter les ensembles de charges 505 et 506 respectivement. De manière avantageuse, les convertisseurs de charge 456 et 466 sont des convertisseurs réversibles.

Les groupes de distribution additionnels 470 et 480 diffèrent des groupes de distribution additionnels 70 et 80 en ce qu'ils ne comprennent pas de convertisseurs additionnels, de bus d'interconnexion additionnel, d'interrupteur primaire additionnel et d'interrupteur intergroupe. Ainsi, les premier et deuxième bus de distribution additionnels 75 et 85 sont connectés respectivement à la première et à la deuxième machine électrique 31 et 32, plus précisément au bobinages 37 et 38 directement via les interrupteurs secondaires additionnels 74 et 84.

La configuration de démarrage du premier moteur 21, qui est représentée à la figure 7, et la configuration de démarrage croisées sont identiques à celles décrites pour le réseau 20. En particulier dans la configuration de démarrage du premier moteur 21, les interrupteurs 42 ou 43, 91 et 52 sont commandés en fermeture et les autres interrupteurs sont commandés en ouverture, et dans la configuration de démarrage croisée, où le premier moteur 21 est initialement en marche et le deuxième moteur 22 initialement à l'arrêt, les interrupteurs 52, 91, 92 et 62 sont commandés en fermeture et les autres interrupteurs sont commandés en ouverture.

En configuration d'alimentation, les interrupteurs 52, 54, 74, 62, 64 et 84 sont commandés en fermeture et les autres interrupteurs sont commandés en ouverture. Ainsi, les convertisseurs 51 et 61 convertissent le courant alternatif fourni par les machines électriques 31 et 32 en courant continu, qui circule jusqu'au convertisseurs de charges 456 et 466. Les convertisseurs de charges 456 et 466 convertissent à nouveau le courant continu en courant alternatif afin d'alimenter les charges 505 et 506 en courant alternatif.

Ainsi, lorsque du courant circule dans les bus de partage 45 et dans les bus d'interconnexion 53 et 63, il est continu, et lorsque du courant circule dans les bus de distribution 55, 65 75 et 85, il est alternatif.

En cas de panne, par exemple du premier convertisseur 51, il est possible de maintenir l'alimentation électrique de la charge 505 en fermant les interrupteurs 54, 91, 92 et 62, ou en commandant en fermeture les interrupteurs 74 et 58, ce qui permet également de maintenir l'alimentation électrique de l'ensemble de charge 505 en cas de panne du premier bus d'interconnexion 53 ou du convertisseur de charge 456. Bien entendu, d'autres configurations sont possibles, notamment pour maintenir l'alimentation des ensembles de charges 506, 507 et 508.

De manière avantageuse, si le premier convertisseur de charge 456 est réversible, s'il est souhaité de recharger la batterie 41a en cas de panne du convertisseur 51, il est possible de continuer à le faire en commandant en fermeture les interrupteurs 74, 58, 54 91 et 42, les autres interrupteurs étant commandés en ouverture. Le premier convertisseur de charge 456 convertit alors du courant alternatif reçu depuis le premier bus de distribution additionnel 75 en courant continu, qui alimente alors la batterie 41a via le premier bus d'interconnexion 53.

Ainsi, il est possible d'alimenter les ensembles de charges 505 à 508, qui sont des charges fonctionnant lorsqu'elles sont alimentées avec du courant alternatif, à partir des moteurs 21 et 22 et de la source électrique auxiliaire 41 qui fournit du courant continu, en assurant des configurations permettant de s'adapter aux pannes du réseau d'alimentation 420.

En variante non représentée, des ensembles de charges supplémentaires, fonctionnant lorsqu'elles sont alimentées par du courant continu, sont connectées aux bus d'interconnexion 53 et 63 et au bus de partage 45.

En variante, non représentée, le réseau d'alimentation 420 ne comprend qu'un seul moteur, par exemple le moteur 21. Dans ce cas, le réseau d'alimentation 420 comprend le moteur 21, la machine électrique 31, les premiers groupes de distribution 450 et 470, les ensembles de charges 505 et 507, la source électrique auxiliaire 41, le bus de partage 45 et le premier interrupteur inter-bus 91.

Toute caractéristique décrite pour un mode de réalisation ou une variante dans ce qui précède peut être mise en oeuvre pour les autres modes de réalisation et variantes décrits précédemment, pour autant que techniquement faisable.

## Revendications

1. Réseau d'alimentation (20 ; 220 ; 420) d'un aéronef (10) comprenant :
- un premier moteur (21) et un deuxième moteur (22) ;
- un premier ensemble de charges (105 ; 505) et un deuxième ensemble de charges (106 ; 506) ;
- une source électrique auxiliaire (41 ; 241) ;
- une première machine électrique (31), connectée mécaniquement au premier moteur (21) ;
- un premier convertisseur (51), connecté à la première machine électrique (31) ;
- un premier bus d'interconnexion (53), connecté d'une part au premier convertisseur (51) par un premier interrupteur primaire (52) et d'autre part au premier ensemble de charges (105) ;
- une deuxième machine électrique (32), connectée mécaniquement au deuxième moteur (22) ;
- un deuxième convertisseur (61) ;
- un deuxième bus d'interconnexion (63), connecté d'une part au deuxième convertisseur (61) par un deuxième interrupteur primaire (62) et d'autre part au deuxième ensemble de charges (106) ; et
- un bus de partage (45), connecté au premier bus d'interconnexion (53) par un premier interrupteur inter-bus (91), connecté au deuxième bus d'interconnexion (63) par un deuxième interrupteur inter-bus (92) et connecté à la source électrique auxiliaire (41 ; 241).

2. Réseau (20 ; 220) selon la revendication 1, comprenant en outre :
- un premier convertisseur additionnel (71), et un deuxième convertisseur additionnel (81) connectés respectivement à la première machine électrique (31) et à la deuxième machine électrique (32) ;
- un premier bus d'interconnexion additionnel (73) et un deuxième bus d'interconnexion additionnel (83), connectés respectivement au premier convertisseur additionnel (71) par un premier interrupteur primaire additionnel (72) et au deuxième convertisseur additionnel (81) par un deuxième interrupteur primaire additionnel (82) ; et
- un premier ensemble de charges additionnelles (107) et un deuxième ensemble de charges additionnelles (108), connectées respectivement au premier bus d'interconnexion additionnel (73) et au deuxième bus d'interconnexion additionnel (83).

3. Réseau (20 ; 220) selon la revendication 2, dans lequel les première et deuxième machines électriques (31, 32) comportent des premiers et deuxièmes bobinages indépendants (35, 36, 37, 38) respectivement et les premier et deuxième convertisseurs (51, 61) sont reliés au premiers bobinages (35, 36) respectivement des première et deuxième machines électriques (31, 32) et les premier et deuxième convertisseurs additionnels (71, 81) sont reliés au deuxième bobinages (37, 38) respectivement des première et deuxième machines électriques (31, 32).

4. Réseau (20 ; 220) selon la revendication 2 ou 3, dans lequel les premier et deuxième bus d'interconnexion additionnels (73, 83) sont directement et seulement connectés respectivement au premier bus d'interconnexion (53) par un premier interrupteur intergroupe (57) et au deuxième bus d'interconnexion (63) par un deuxième interrupteur intergroupe (67).

5. Réseau (20 ; 220) selon l'une quelconque des revendications 1 à 4, comprenant en outre :
- un premier bus de distribution (55) et un deuxième bus de distribution (65), connectés respectivement au premier bus d'interconnexion (53) par un premier interrupteur secondaire (54) et au deuxième bus d'interconnexion (63) par un deuxième interrupteur secondaire (64) et connectés respectivement au premier ensemble de charges (105) et au deuxième ensemble de charges (106).

6. Réseau (20 ; 220) selon la revendication 5, comprenant en outre un premier bus de distribution additionnel (75) et un deuxième bus de distribution additionnel (85), les premier et deuxième bus de distribution additionnels (75, 85) étant connectés de manière respective uniquement :
- au premier bus de distribution (55) par un troisième interrupteur intergroupe (58), et au deuxième bus de distribution (65) par un quatrième interrupteur intergroupe (68);
- au premier ensemble de charges additionnelles (107) et au deuxième ensemble de charges additionnelles (108) ; et
- au premier bus d'interconnexion additionnel (73) par un premier interrupteur secondaire additionnel (74), et au deuxième bus d'interconnexion additionnel (83) par un deuxième interrupteur secondaire additionnel (84).

7. Réseau (20 ; 220) selon l'une quelconque des revendications 2 à 6, dans lequel deux convertisseurs parmi le premier convertisseur (51), le deuxième convertisseur (61), le premier convertisseur additionnel (71) et le deuxième convertisseur additionnel (81) sont des onduleurs de tension et deux convertisseurs sont des onduleurs de courant.

8. Réseau (20 ; 220) selon l'une quelconque des revendications précédentes, dans lequel les première et deuxième machines électriques (31, 32) sont chacune une machine électrique parmi une machine asynchrone, une machine synchrone et une machine à reluctance variable.

9. Réseau (20 ; 220) selon l'une quelconque des revendications précédentes dans lequel le premier et le deuxième bus d'interconnexion (53, 63) sont connectés à la source électrique auxiliaire (41 ; 241) uniquement par le bus de partage (45).

10. Réseau (220) selon l'une quelconque des revendications précédentes, comprenant en outre une première batterie (244a) et une deuxième batterie (244b), connectées respectivement au premier bus d'interconnexion (53) et au deuxième bus d'interconnexion (63).

11. Réseau (420) selon la revendication 1, comprenant en outre un premier convertisseur de charge (456) et un deuxième convertisseur de charge (466), connectés d'une part respectivement au premier bus d'interconnexion (53) et au deuxième bus d'interconnexion (63) et d'autre part respectivement au premier ensemble de charges (505) et au deuxième ensemble de charges (506).

12. Réseau (20 ; 220 ; 420) selon l'une quelconque des revendications précédentes, le réseau (20) étant configuré pour être dans une configuration de démarrage, dans laquelle :
- le premier interrupteur primaire (52) et le premier interrupteur inter-bus (91) sont fermés ; et
- la première machine électrique (31) est alimentée par la source électrique auxiliaire (41) pour que la première machine électrique (31) génère un couple mécanique.

13. Réseau (20 ; 220 ; 420) selon l'une quelconque des revendications 1 à 11, le réseau (20 ; 220 ; 420) étant configuré pour être dans une configuration d'alimentation, dans laquelle :
- le premier interrupteur primaire (52) et le premier interrupteur secondaire (54) sont fermés ; et
- la première machine électrique (31) convertit un couple mécanique fourni par le premier moteur (21) en un courant électrique.

14. Aéronef (10) comprenant un réseau d'alimentation (20 ; 220 ; 420) selon l'une quelconque des revendications précédentes.

15. Aéronef (10) selon la revendication 14, comprenant en outre un réseau de fonctions avioniques (120) et un réseau de commandes de vol (130), connectés à au moins une machine électrique (93, 94, 95, 96) différente des première et deuxième machines électriques (31, 32), entraînée par l'un des premier et deuxièmes moteurs (31, 32).
